# EUROPEAN PATENT APPLICATION

(11) **EP 1 265 054 A1**
(43) Date of publication of application: **11.12.2002**
(21) Application number: 01202202.6
(22) Date of filing: 08.06.2001
(51) Int. Cl.: G01C 21/30

(54) **Vehicle navigation system**

(71) Applicant: Itinerary Systems, ISAB, 221 05 Lund (SE)
(72) Inventor: Stewenius, Henrik Carl, 221 05 Lund (SE)
(74) Representative: Buckley, Guy Julian

(57) **Abstract**

Vehicle navigation system comprising a navigation signal receiving means adapted to receive navigation signals, e.g. a GPS signal, including a position area, within said area the vehicle is located, a processing means comprising a map having a structure with one-dimensional segments having two nodes. Solutions are assigned scores by said processing means according to a score assigning algorithm based on received navigation signals, a number of possible solutions indicating possible positions of the vehicle are determined based on the number of assigned scores and an optimal solution indicating the position of the vehicle is obtained by applying optimal solution criteria on said determined solutions. The system also comprises an indicating means that generates an alarm signal if the present speed of the vehicle in the present position exceeds the present speed limit.

## Description

### Field of the invention

The present invention relates to a vehicle navigation system and to a method of using this system for determining the position of the vehicle according to the preambles of the independent claims.

### Background of the invention

The Global Positioning System (GPS) was developed by the US government in order for the US military to have a precise form of world wide positioning for maneuvering, navigation targeting surveying and so on. The GPS is now also used for many non-military purposes on land, at sea, and in the air.
A GPS receiver acquires GPS signals sent from a constellation of satellites. GPS uses the satellites in space as reference points. By accurately measuring the receiver's distance from each satellite in the constellation one can triangulate the receiver's position anywhere on earth. To triangulate, a GPS receiver located on earth measures the distance from the receiver to each of the satellites of a constellation using the travel time of radio signals from each satellite.

Until May 1st 2000 the US military intentionally induced an error in the signal called Selected Availability (SA). This was done in order to prevent civilians from using the same precision. The error ranged from 0 to 100 meters into the signal transmitted by the satelites. US military receivers were not affected by SA because they have access to a decryption key to remove the SA errors. SA is still in use where the US military find so appropriate.

In order to correct the error induced by the SA, as well as problems with accuracy because of bad reception, a process called Differential Correction or Differential GPS (DGPS) was developed. This is achieved by using a ground based referential station with a known position. This gives an accuracy of 1-10 meters, but it is a rather expensive system because it requires two receivers; one for the GPS signals and one for the signals received from the referential station. The referential station also requires a fee for the use of the correction signal.

US-5.774.824 describes a map matching navigation system for monitoring vehicle state characteristics, including the location of a vehicle on a map route. The system contains a set of sensors that may include an accelerometer and a gyroscope as well as GPS receiver, if a GPS system is utilized. The sensor provides vehicle state information, which is forwarded to a navigator that calculates a measured point of the vehicle based upon the vehicle state information. A map route processor determines the appropriate position of the map route, which corresponds to the measured point. A matched point is determined on the map route that corresponds to the measured point. Measured points from the navigator will deviate from the map route due to numerous sources of error.
For map matching, each measured point should have a corresponding matched point along the map route. The matched point represents the real position of the vehicle with the highest probability. The matched point is determined by statistical calculations based on the history of the mean deviation between measured and matched points. Statistical parameters used for map matching may also be utilized to identify a specific map route on which the vehicle is travelling from a plurality of candidate routes. The system monitors the vehicle position with respect to each candidate route until an appropriate map route is identified and the other candidate routes are discarded.
One drawback with US-5.774.824 is that the statistical calculations used to determine the position of the vehicle is a rather complicated method that might require rather powerful computer capacity to be performed in real time.
The objective of the present invention is to achieve a navigation system without the drawbacks of the above-mentioned system by using a non-differential GPS to be executed on less powerful computers giving the position of the vehicle with high accuracy in real time.
Another purpose of the present invention is to increase the safety for the driver of the vehicle, other road users, and for pedestrians.

### Summary of the invention

The above-mentioned objectives are achieved by a navigation system and a method of using a navigation system according to the independent claims.

Preferred embodiments are set forth in the dependent claims.

According to a preferred embodiment of the invention the navigation system is adapted to indicate to the driver of the vehicle the present speed limit of the road. In case the driver exceeds the speed limit an alarm signal is generated to the driver.

### Brief description of the drawings

Figure 1 illustrates how the map used in the system is obtained.

Figure 2 illustrates the initialization of the system.

Figure 3 illustrates the generation of new solutions.

Figure 4 shows a schematic block diagram of the navigation system according to the claimed invention.

Figure 5 is a flow diagram illustrating the present invention.

### Detailed description of preferred embodiments of the invention

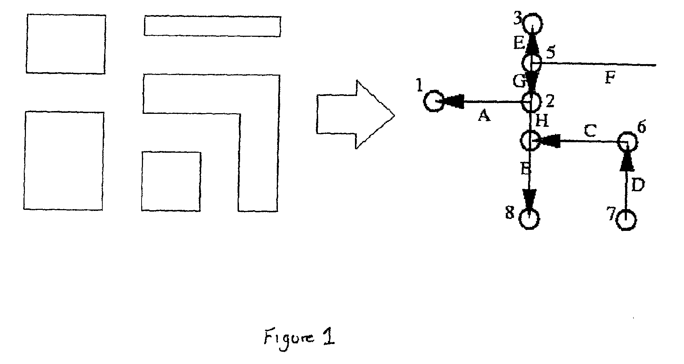

Figure 1 shows schematically how the map used in the system according to the invention is obtained.
There are many different formats of digital maps available on the market today. One digital map format is the Geographic Data Format (GDF) where the map is stored in a vectored format that includes information about how the roads are connected to each other, geometric data and other data such as speed limits. This digital map information is converted to the map format used in the present invention comprising two distinct elements: segments and nodes.
A segment is a one-dimensional object with length and direction, and it refers to a node at each endpoint. It also contains additional information such as speed limit, driving restrictions and street names. The segments are shown in figure 1 as arrows A-H.
A node includes information about location (X,Y) and the segments connected to this node. The nodes are shown in figure 1 as circles 1-9.
The right part of figure 1 shows a part of a map with some roads and the corresponding segments and nodes.

Throughout the description a solution is defined as a possible position for the vehicle. The solutions are assigned a score according to a score assigning algorithm and an optimal solution is determined according to optimal solution criteria based on the position of the vehicle. The solutions move as the vehicle moves and the number of solutions continuously changes depending on, among other things, the topography of the map.

An illustrative way to visualize the invention is to picture each solution at a given time as a position having a height, related to the score of that position. The heights and the positions of all solutions constantly change as the vehicle moves.

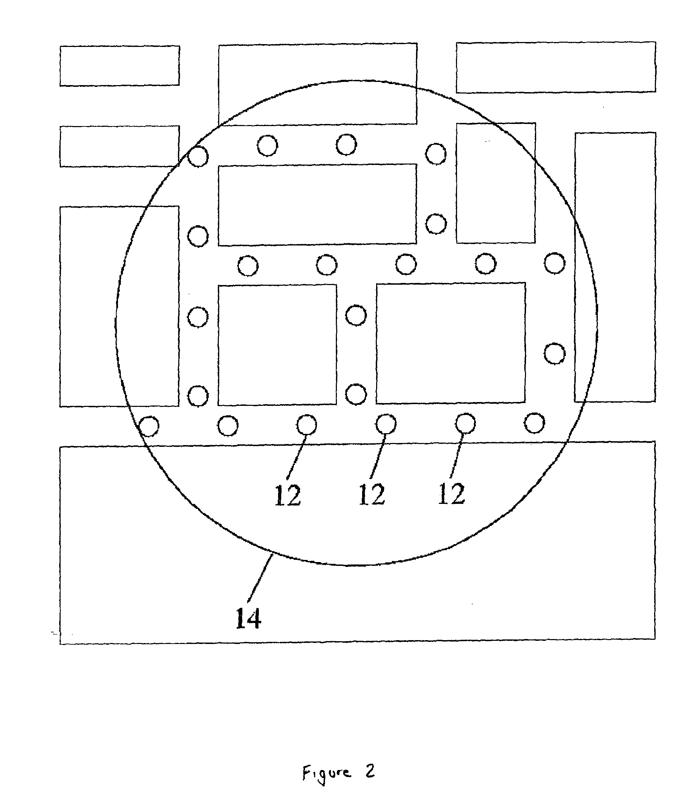

Figure 2 illustrates the initialization of the system according to the present invention. Each circle 12 represents a solution within a vehicle position area 14, with a score assigned to each solution. The figure is only showing the principle used when starting up the system, hence no segments or nodes are shown in the figure. The solutions may be spread out evenly on segments inside the position area, but other alternatives are naturally possible. According to one alternative more solutions are spread out close to the center of the position area than close to the border of the position area.

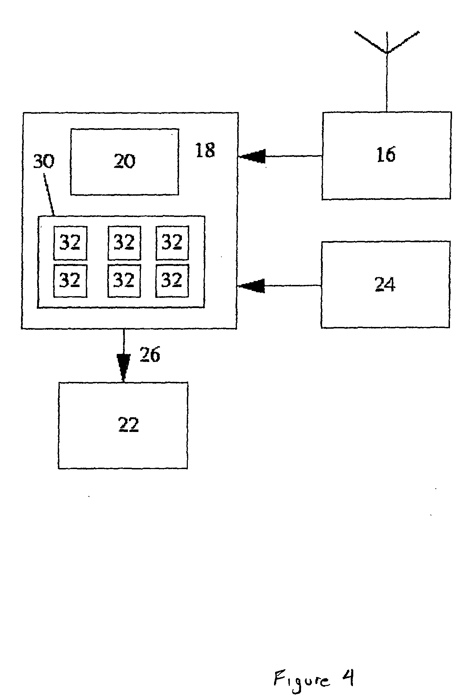

Figure 4 shows a schematic block diagram of the navigation system according to the claimed invention. The system comprises a processing means 18 including a map database 20 and a memory means 30 with storage units 32. Each storage unit includes data related to one solution, a navigation signal receiving means 16, and an indicating means 22. The navigation signal receiving means comprises at least two position sensing means, one direction sensing means, and one distance sensing means.
According to a preferred embodiment, the processing means comprises a CPU with H8/3003 14.7 MHz processor from Hitachi running a real time operating system.

According to a preferred embodiment of the invention, the position of the vehicle is a GPS position (X,Y)_{GPS} that is received by a GPS receiving means 16. The received position is identified on the map and the position is determined in a position area 14 e.g. a circle with a radius of 100m, with (X,Y)_{GPS} in the middle of the circle. Because of the error in the signal, as well as potential reinstallation of the induce error (SA), the vehicle can be located anywhere in the position area. As the vehicle moves along the street in the map the position area also moves.

The direction of the vehicle (designated with θ) can be measured in many different ways. Different types of gyros can be used e.g. a fiber optic gyro (based on the Sagnac effect) gives a very good accuracy in the measurements, but this method is rather expensive. Piezoelectric gyros have a more reasonable price, but lack long-term stability. In addition a magnetic compass can be used for determining the heading of the vehicle.
The direction of the vehicle can also be directly determined by the received GPS data (as described in detail below).
A combination of different techniques can be used, for example GPS-data based calculation can be stabilized by using gyro measurements.

The distance d traveled by the vehicle can be determined in many different ways by any known odometer. In most cars built during the nineties the speedometer is based on a sensor in the gearbox that generates a predetermined number of pulses (about 8-12) per revolution. Knowing the wheel radius this gives a very precise value of the distance rolled. The wheel radius can e.g. be auto calibrated during a session by using GPS data at high speed.
The distance traveled can also be determined by integrating the velocity calculations performed based on GPS data (described in detail below). The above mentioned sensing means are all designated in figure 4 as navigation signal sensing means 16.

Irrespectively of how the different measured values are obtained, it is important to notice that essentially three major groups of measurement data may be used in order to determine the position of the vehicle according to the claimed invention. These groups of measurements are related to the position (preferably obtained by a GPS measurement), the direction (obtained from the GPS measurement, from a gyro or a compass), and the distance traveled. To determine the position we will need at least two of the groups. The accuracy of the measurement depends on how many of the three groups are used.

Solutions are assigned a score according to a score-assigning algorithm. The scores of the solutions are updated with a certain frequency. According to a preferred embodiment of the present invention this is performed twice per second (2Hz), i.e. each time a GPS position (X,Y)_{GPS} is received.

The score assigned each solution depends among other things on how well the current direction 0 of the vehicle coincides with the direction of the segment where the solution to be updated is located. Table 1 illustrates the dependency between angle difference and awarded score according to a preferred embodiment of the invention. It should be noted that the largest angular difference is 180° since only the absolute value of the difference is determined.

**Table 1**

| *Angle difference* | *Scores* |
|---|---|
| 0 - 3 | 45 |
| 4 - 6 | 40 |
| 7 - 17 | 30 |
| 18-23 | 0 |
| 24 - 45 | -50 |
| 46 - 90 | -100 |
| 91 - 135 | -200 |
| 136 - 180 | -500 |

The assigned score according to the score assigning algorithm can be summarized as:
i) The solutions move as the vehicle moves.
ii) The score assigned each solution depends on how well the current direction θ of the vehicle coincides with a direction of the solution to be updated.
iii) Reduce the score for a solution as the distance to the present position area increases. (geographic correlation).
iv) Reduce the score for a solution when a predetermined time period has elapsed since last reduction of the score (aging correlation).
v) Zero is the lowest score for a solution. Solutions with negative score are removed.

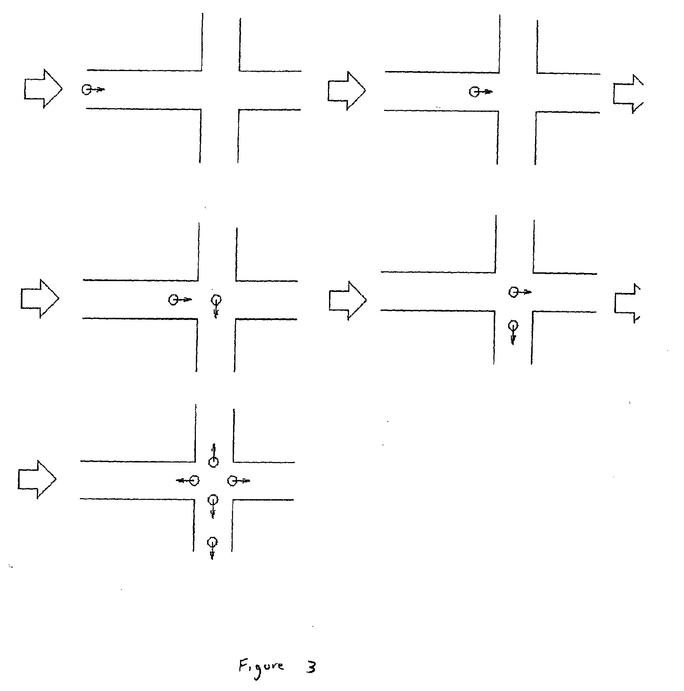

When a solution reaches a node where more than one segment is connected, the solution is divided into one new solution per outgoing segment. These new solutions have the same scores as the original solution, and a new solution continues on each of the segments where it is assigned scores as previously described. The process of new solutions is illustrated in fig 3 where a solution approaching a crossroad eventually generates a number of new solutions. In this example is the direction changed 90° from East to South. The arrow attached to each solution (circle) in the figure illustrates the direction for that specific solution.

According to a preferred embodiment of the invention new solutions will also be generated ahead and behind the currently best solutions. These solutions are a predetermined number in the order of 5-10, of which the present position of the vehicle is given by the optimal solution.
As stated above all solutions are assigned scores at a predetermined frequency, e.g. 2Hz. A moving vehicle travels a distance d between two assignments of scores. At the same time all solutions move the same distance.

According to a preferred embodiment, a solution comprises data related to
- the present position, i.e. the identity of the present segment and the distance in meters to one of the endpoints. This position is valid at the moment of score assignment,
- the score for the solution,
- the present direction,
- the time elapsed since the solution was last assigned scores.

The choosing of an optimal solution is made in accordance with optimal solution criteria.
The basic principle when choosing an optimal solution is that the solution with the highest score is chosen.

The optimal solution is presented to the user or used for generating an alarm (see below). The position could e.g. be indicated on a map on a display available to the driver or used for supervising the vehicle.

If two or more solutions are too close to each other the weaker solution(s) is/are deleted (closeness criterion). The test of closeness is constantly performed and applicable e.g. when solutions have the same direction and are separated by a distance less than a predetermined value. This predetermined distance is an important control parameter of the system since it can differ between individual segments and it depends on the resolution of the map.

If at any time too many solutions are active the solutions having the lowest score will be deleted (limited number criterion). The level of accepted scores is set dependent on the allowed workload of the system. This criterion could also be implemented by allowing only a predetermined number of solutions to be active at the same time.

A list of active solutions is arranged and ordered dependent on the number of scores for the solutions where the top elements has the highest score and is thus currently the optimal solution. This list is continuously reordered as new scores are assigned to solutions.

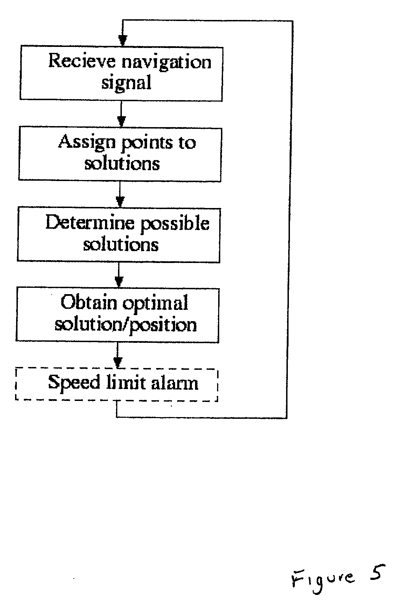

Figure 5 is a flow diagram summarizing the important steps performed by the navigation system according to the present invention.

A queue of solutions is arranged that indicates when a specific solution will change state. A solution can be in any of three different states along a specific segment:
1. Steady state.
2. Waiting state: solution is waiting for a significant feature related to information stored in relation to a specific segment (e.g. change of speed limit)
3. End state which begins at the expected end of a segment and at this moment new solutions will be generated as indicated below. The old solution is deleted.

The system also contains an unordered list of segment events on the map waiting for real events to correspond with them.

Each segment has a separate queue with solutions ordered by where this solution is on the segment. The purpose of this queue is to control how close the solutions are to each other. This is important in order to limit the number of solutions in the system and to prevent solutions from being identical.

According to a preferred embodiment of the invention the navigation system is adapted to indicate to the driver of the vehicle the present speed limit of the segment. In case the speed of the vehicle exceeds the limit, an alarm signal is generated to the driver.
The present speed of the vehicle can be determined in many ways. As briefly mentioned above most cars built during the nineties are equipped with a speedometer based on a sensor in the gearbox that generates about 8-12 pulses per revolution. By referring to fig 4 the pulses are generated by sensor means 24 and applied to the processing means 18 where the present speed of the vehicle is easily determined by using the clock of the processing means as time reference. The present speed limit is obtained from the segment of the optimal solution and the comparison with the present speed is performed by the processing means. This is performed by e.g. setting the present speed limit in a threshold detector and the present speed as the input signal. When the present speed exceeds the threshold (the present speed limit) an indication signal 26 is generated and applied to the indicating means 22. The indicating means then generates an alarm signal in response to the indication signal. The alarm signal is intended for alerting the driver and it could be of any kind, e.g. audible or visible. According to a further refinement of the preferred embodiment of the present invention is the indication signal 26 indicative of the difference between the present speed and the present speed limit. It is then possible to generate and alarm signal that is weaker if the difference is small and is stronger if the difference increases. It is naturally possible to combine different kinds of alarm signals.

The present invention is not limited to the above-described preferred embodiments. Various alterations, modifications and equivalents may be used. Therefore the above embodiments should not be taken as limiting the scope of the invention, as defined by the appendant claims.

## Claims

1. Vehicle navigation system comprising a navigation signal receiving means (16) adapted to receive navigation signals defining a position area, within said area a vehicle is located, a processing means (18) comprising a map having a structure with segments having two nodes, **characterized in that** solutions are dynamically arranged in relation to said segments representing possible positions of the vehicle, wherein said solutions are assigned scores by said processing means according to a score assigning algorithm based on received navigation signals, and that an optimal solution indicating the position of the vehicle is determined by applying optimal solution criteria on said solutions.

2. Vehicle navigation system according to claim 1, **characterized in that** the optimal solution is determined as the solution having the highest score.

3. Vehicle navigation system according to claim 1 or 2, **characterized in that** said the scores of said solutions are continueously updated or updated at a predetermined frequency, preferably 2 Hz.

4. Vehicle navigation system according to any preceding claim, **characterized in that** said solutions move as the vehicle moves.

5. Vehicle navigation system according to any preceding claim, **characterized in that** said navigation signals comprises at least two of a position signal, a direction signal and a distance signal.

6. Vehicle navigation system according to any preceding claim, **characterized in that** said navigation signal receiving means comprises a direction determining means for determining the current direction of the vehicle and that the number of scores assigned each solution depends on the difference between the current heading of the vehicle and the direction of the present segment.

7. Vehicle navigation system according to any of claims 1-5, **characterized in that** said navigation signal receiving means comprises a distance determining means for determining a distance used by the optimal solution criteria.

8. Vehicle navigation system according to any preceding claim, **characterized in that** the system further comprises an indicating means adapted to indicate to the driver the position of the vehicle, relevant vehicle data, and to present a route on a map.

9. Vehicle navigation system according to claim 8, **characterized in that** said indicating means generates an alarm signal in response of an indication signal generated by the processing means when the present speed of the vehicle exceeds the speed limit stored in association with the present position.

10. Vehicle navigation system according to any preceding claim, **characterized in that** said navigation signal is a GPS signal.

11. Vehicle navigation system according to claim 10, **characterized in that** said direction of the vehicle is determined from said GPS signal.

12. Vehicle navigation system according to any preceding claim, **characterized in that** said processing means comprises memory means with storage units, wherein each storage unit holds data related to one solution.

13. Vehicle navigation system according to claim 12, **characterized in that** said data related to one solution comprises the number of scores, a position in relation to segment/nodes and a direction.

14. Method of determining the position of a vehicle using a vehicle navigation system comprising a navigation signal receiving means adapted to receive navigation signals defining a position area, within said area a vehicle is located, a processing means comprising a map having a structure with segments having two nodes, **characterized in that** said method continuously performs the following steps:
dynamically arranging solutions in relation to said segments, said solutions representing possible positions of the vehicle;
assigning scores to solutions by said processing means according to a score assigning algorithm based on received navigation signals, and
determining an optimal solution indicating the position of the vehicle by applying optimal solution criteria on said solutions.

15. Method according to claim 14, **characterized in that** the optimal solution is obtained as the segment position having the highest score.

16. Method according to any of claims 14 and 15, **characterized in that** said solutions move as the vehicle moves.

17. Method according to any of claims 14-16, **characterized in that** said navigation signals comprises at least two of a position signal, a direction signal and a distance signal.

18. Method according to any of claims 14-17, **characterized in that** said method further comprises the following steps:
determining the current direction of the vehicle and assigning scores to solutions depending on the difference between the current heading of the vehicle and the direction of the present segment.

19. Method according to any of claims 14-18, **characterized in that** said method further comprises the following steps:
indicating a speed limit associated with the present position, wherein speed limits are stored in relation with segments of the map, and
generating an alarm signal if the speed of the vehicle exceeds the speed limit associated with the present position.

20. Method according to any of claims 14-19, **characterized in that** said method further comprises the following steps:
indicating to the driver the position of the vehicle, relevant vehicle data, or presenting a route on a map.
